# EUROPEAN PATENT SPECIFICATION

(11) **EP 3 473 090 B1**
(45) Date of publication and mention of the grant of the patent: **17.11.2021**
(21) Application number: 18201338.3
(22) Date of filing: 18.10.2018
(51) Int. Cl.: A01M 23/16, A01M 25/00

(54) **BARRIER**
BARRIERE
BARRIÈRE

(30) Priority: 23.10.2017 GB 201717370
(43) Date of publication of application: 24.04.2019
(73) Proprietor: Pelsis Limited, Grimbald Crag Close Knaresborough North Yorkshire HG5 8PJ (GB)
(72) Inventor: ASHTON, Paul, Knaresborough North Yorkshire HG5 8PJ (GB)
(74) Representative: Appleyard Lees IP LLP

(56) References cited:
- EP-A1- 3 298 891
- WO-A1-2016/081865
- GB-A- 2 457 339
- US-A- 4 453 337
- US-A- 4 590 703
- US-A- 4 619 071
- US-A1- 2015 342 171

## Description

### FIELD

This invention relates to a pest station for trapping a target species comprising a chamber and a non-target species barrier, and a method of servicing said pest station.

### BACKGROUND

Pest stations are used to catch and eliminate vermin and other nuisance animals. For example, rodent stations are used to catch and eliminate rodents. Various types of pest stations are known in the art, and typically define a chamber that comprises a means of capturing or killing the pest (hereinafter a trapping/killing means).

For example, the trapping/killing means may comprise one or more mechanical traps, toxic rodenticide or glue traps. Mechanical traps, also known as snap traps, typically use a spring mechanism which, when triggered, quickly kills a rodent. Other trapping/killing means may involve closing an entrance to the trap in order to trap the rodent without eliminating the rodent, which can then be released back into the environment. Similarly, devices may retain the pest, through a closing entrance, before asphyxiating them with a gas. Bait boxes may involve setting rodenticide (referred to in the art as "bait") which will poison the rodent when consumed. Glue rodent stations catch the rodent such that it cannot escape the trap and eventually dies.

Typically, pest stations, containing the chosen trapping/killing mechanism, are positioned on either known 'pest runs', or in locations suspected of having pest activity. This technique is complimented through the pest being lured into the trap by the scent of a foodstuff, referred to in the art as a 'lure' or 'attractant', (e.g. a foodstuff containing the rodenticide, or a foodstuff placed on the mechanical trap). However, there are risks associated with this practice.

When rodenticide is used, it may be poisonous to humans and animals other than the target species (i.e. other than rodents in the case of a rodent station). Children, pets and non-target wildlife species have been known to find rodenticide and to touch it and/or consume it, causing health problems and, in some cases, death to animal life. Therefore, there is a reluctance to employ rodenticide where children, pets, wildlife and livestock can access it. Particular difficulties arise with hedgehogs, squirrels, snakes, and birds accessing rodent stations.

Even if the non-target species is unaffected by the consumption of the rodenticide (e.g. in the case of slugs and snails), the consumption of all or some of the rodenticide and/or associated lure renders the trap significantly less efficacious in trapping the target species.

Similar difficulties arise with pest stations comprising mechanical or glue traps, which inadvertently lure non-target species, thereby causing death/injury to non-target species and rendering the trap ineffective in trapping the target species, having been deployed against the non-target species.

It is an aim of the invention to overcome at least some of the above-mentioned disadvantages, and any other disadvantages that may be apparent to the skilled reader from the description herein. It is a further aim of the invention to provide an improved means of preventing non-target species from accessing a pest station. US4453337 discloses a feed station with a separate bait cup. US4619071A discloses a rodent poison bait station comprising a pair of bait containing compartments, GB2457339A discloses a copper device applied to a rodent box to inhibit access by slugs and/or snails. US 2015/342171A discloses a trash can trap used to trap and kill rats, mice and other rodents. WO2016/081865A1 discloses a pest management apparatus with a separator to improve the function of a rodent sensor. Z US4590703A describes a known rodent trap.

### SUMMARY

According to the present invention there is provided an apparatus and method as set forth in the appended claims. Other features of the invention will be apparent from the dependent claims, and the description which follows.

According to a first aspect of the invention there is provided a pest station for trapping a target species, comprising a chamber and a non-target species barrier adapted to prevent ingress of non-target species to a pest station by having sufficient strength to prevent a non-target species from breaching the barrier, the pest station being configured to retain the non-target species barrier, positioned so as to prevent ingress of non-target species to the chamber wherein the non-target species barrier is formed of cardboard, fabric or plastic, wherein the non-target species barrier comprising a plurality of apertures, wherein the apertures are sized such that the non-target species and a target species cannot pass therethrough, wherein the non-target species barrier is adapted to allow formation of an aperture therein by chewing, gnawing and/or scratching of a target species, so as to allow ingress of the target species to the pest station, wherein the target species is a rodent, characterised in that: the pest station further comprises a retaining portion configured to retain the non-target species barrier, wherein the retaining portion comprises a plurality of slots, each slot being arranged to retain a respective edge of the non-target species barrier; and a lid hingedly attached to the pest station; wherein the non-target species barrier is a sheet slidably attachable to the retaining portion.

The non-target species barrier may be disposable.

The non-target species barrier may be a substantially planar member.

The non-target species barrier may be formed of a material that can be gnawed or chewed through by the target species. The non-target species barrier may be formed of cardboard, preferably wax-coated cardboard. The non-target species barrier may be formed of plastic. The non-target species barrier may be formed of fabric.

The apertures may be arranged in a grid. The grid may be defined by a plurality of vertical cross-members and horizontal cross-members. The apertures may be sized such that a target species cannot pass therethrough. The apertures may be rectangular, square, circular, oval-shaped or triangular, or any combination thereof. The apertures may be uniform in size. Alternatively, the apertures may vary in size and/or shape.

Advantageously, the apertures allow the target species to smell and see a lure through the non-target species barrier. Furthermore, the apertures present a point of weakness in the non-target species barrier, which can be chewed or gnawed. Advantageously, the apertures may make it easier for a target pest, such as a rat, to start to gnaw through the non-target species barrier material.

The non-target species barrier may comprise a border region without apertures. The border region may extend inwards from at least one edge of the non-target species barrier. The at least one edge may be a base of the barrier. Preferably, the border region extends inwards by 10mm - 30mm, preferably 20mm. Accordingly, the border region prevents slugs accessing the chamber.

The non-target species barrier may be symmetrical about a central axis, preferably a horizontal axis. Accordingly, the barrier may be inserted from either end such that there is no defined top or bottom, simplifying installation.

The target species may be a rat, or alternatively a mouse.

The target species is advantageously attracted to breach the non-target species barrier by means of a lure, such as food.

The retaining portion may comprise a pair of slots, disposed opposite each other. The slots may be substantially vertically orientated, so that the non-target species barrier is receivable by a downward sliding movement into the slots. Each slot may be defined by a pair of parallel projections. The pest station may comprise a plurality of retaining portions, so as to retain a plurality of non-target species barriers.

The pest station may comprise an entrance section having an aperture formed therein to allow access to the chamber. The entrance section may comprise a wall having an aperture formed therein to allow access to the chamber. The retaining portion may be disposed proximate to the aperture, preferably so that the non-target species barrier covers the aperture once installed. The pest station may comprise a pair of guard walls, extending into the chamber from either side of the aperture. The retaining portion may be formed on the guard walls. The chamber may comprise at least two sub-chambers. The sub-chambers may be accessible from the entrance section. Where there is more than one sub-chamber, each sub-chamber may incorporate a trapping/killing zone, which may be adapted to retain a target species attractant and/or a trapping/killing means.

The pest station may comprise a spacer, extending in a direction away from the chamber. The spacer may comprise an upper part of a front wall of the pest station. The aperture may be formed in a lower part of the front wall. The provision of a spacer allows for the pest station to be readily positioned against a wall, but with a gap between the entrance to the box (i.e. the aperture) and the wall, thereby defining a channel.

Some pests, such as rats, are known to stay close to walls when travelling and they are wary of items placed in familiar thoroughfares. The present invention allows for the familiar thoroughfare to remain accessible to the pest, by having a spacer to keep the box away from the wall. This provides a pest station that allows a pest to walk along the wall uninterrupted and so it is more successful in trapping a pest because the pest is not scared away by a change in the contours of the wall or blockage. The pest walks along the wall as normal and then is lured into the chamber through the aperture.

The pest station may comprise a tunnel, extending along a front wall of the pest station, preferably defined by the front wall and a tunnel wall disposed opposite the front wall. The aperture may be formed in the front wall.

The pest station may comprise two retaining portions, disposed at opposing ends of the tunnel or channel.

The pest station, preferably the chamber, may comprise a trapping/killing zone, operable to retain a trapping/killing means. The trapping/killing means may comprise a lure to lure the target species, preferably an olfactory attractant, preferably a foodstuff. The trapping/killing means may comprise poison, preferably rodenticide. The trapping/killing means may comprise a mechanical trap. The mechanical trap may be a snap trap. The pest station may comprise a plurality of trapping/killing zones. The pest station may be a live catch trap, in which case the trapping/killing means is a trapping means. The live catch trap may comprise a door arranged to close behind a pest that has entered the live catch trap. The door may be spring loaded or weighted. The live catch trap may be formed of wire.

According to another aspect of the invention there is provided a method of servicing a pest station as defined in the first aspect comprising the step of:
installing the non-target species barrier, so as to prevent ingress of non-target species to the chamber of the pest station.

The method may comprise the step of removing a damaged non-target species barrier, before installing an undamaged non-target species barrier.

Further preferred features of the method of the fourth aspect are defined hereinabove in relation to the pest station of the first aspect, and may be combined in any combination.

### BRIEF DESCRIPTION OF DRAWINGS

For a better understanding of the invention, and to show how embodiments of the same may be carried into effect, reference will now be made, by way of example only, to the accompanying diagrammatic drawings in which:
FIGs. 1-3 are perspective, side and rear views of a pest station according to an example of the invention;
FIG. 4 is a perspective view of the pest station of FIGs. 1-3 and an example non-target species barrier;
FIG. 5 is a perspective view of the pest station of FIGs 1-4 with the non-target species barrier installed;
FIG. 6 is a schematic plan view of a first layout of an exemplary pest station;
FIG. 7 is a schematic plan view of a second layout of an exemplary pest station, and
FIG. 8 is a perspective view of an exemplary non-target species barrier installed.

In the drawings, corresponding reference characters indicate corresponding components. The skilled person will appreciate that elements in the figures are illustrated for simplicity and clarity and have not necessarily been drawn to scale. For example, the dimensions of some of the elements in the figures may be exaggerated relative to other elements to help to improve understanding of various examples of the invention. Also, common but well-understood elements that are useful or necessary in a commercially feasible example are often not depicted in order to facilitate a less obstructed view of these various examples.

### DESCRIPTION OF EMBODIMENTS

In overview, examples of the invention provide a non-target species barrier that, when installed in a pest station, prevents the non-target species accessing the chamber housing a lure and a trapping/killing means. However, the barrier is configured so that a target species is able to form a hole in the barrier (e.g. by gnawing, chewing or scratching at the barrier), and therefore access the chamber. The barrier has a construction that allows it to withstand attempts to access the chamber by non-target species.

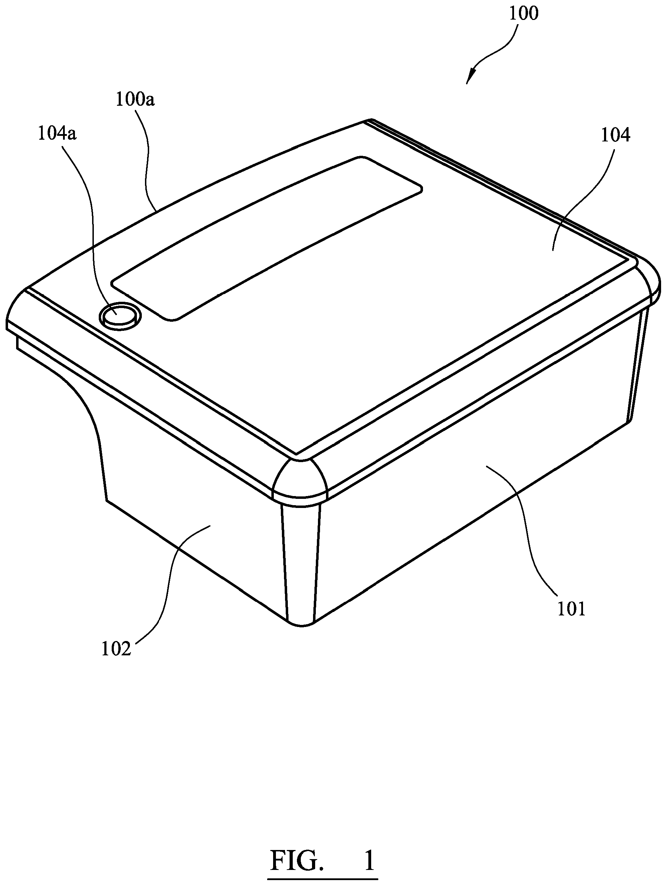

FIGs. 1-5 show an exemplary pest station 100. In the example shown, the pest station 100 is a rodent station, arranged to capture/eliminate rats or mice.

The pest station 100 comprises a chamber 110, defined by rear wall 101, side walls 102, front wall 103 and lid 104. The rear wall 101 and front wall 103 are disposed substantially opposite, and in a plane substantially parallel, each other. Similarly, the side walls 102 are disposed substantially opposite, and in a plane substantially parallel, each other. Accordingly the pest station 100 takes the form of a cuboid body. It will be understood that the terms front and rear are relative terms intended to differentiate one end of the station from another.

The chamber 110 is arranged to retain one or more trapping/killing means. In the example shown, two trapping/killing zones 111a,b are provided within the chamber, at opposite sides thereof. Each trapping/killing zone 111a,b is arranged to retain a trapping/killing means. For example, each zone 111a, b may have suitable means for retaining a snap trap, glue trap, or rodenticide.

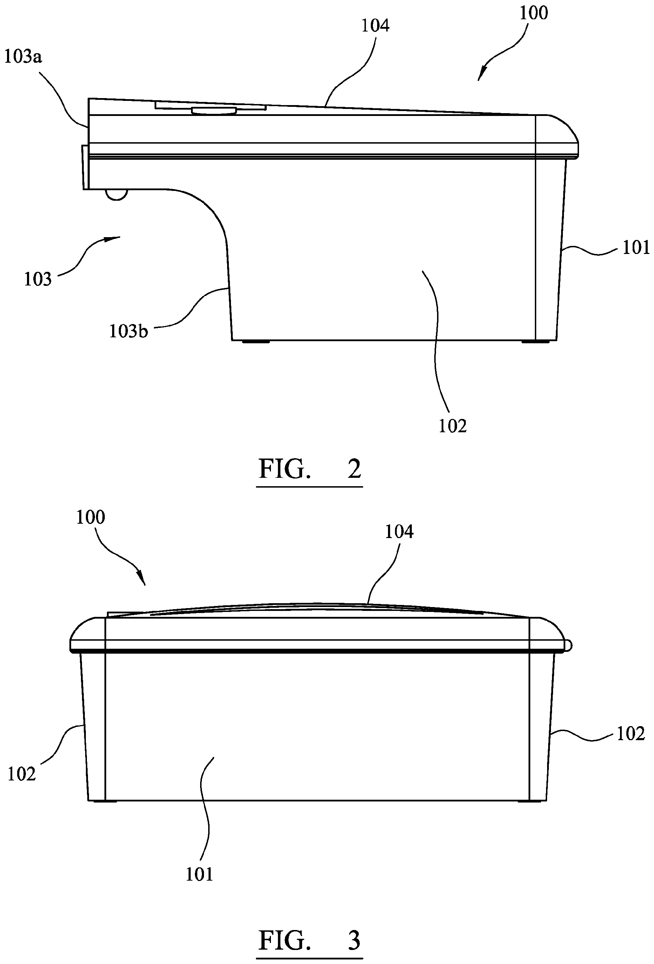

As can be best seen in FIG. 2, the front wall 103 comprises an upper portion 103a and a lower portion 103b.

The lower portion 103b is disposed in a plane substantially parallel to the plane of the upper portion 103a. The lower portion 103b is positioned behind the upper portion 103a - in other words the distance between the lower portion 103b and the rear wall 101 is smaller than the distance between the upper portion 103a and the rear wall 101. Accordingly, the front wall 103 has a stepped configuration when viewed from the side.

Once the upper portion 103a of front wall 103 is disposed against a wall (e.g. an exterior or interior wall of a building), the lower portion 103b faces the wall but is spaced therefrom by the upper portion 103a and a front portion 100a of the box 100 extending forward of the lower portion 103a and away from the chamber 110, which accordingly acts as a spacer. The front portion 100a defines a channel thereunder, through which rodents can pass whilst remaining substantially in contact with the wall. In one example, the upper portion 103 is securable to the wall, for example by means of screws, adhesive or the like.

Advantageously, this allows the rodent to pass along the wall/floor whilst being minimally disturbed by the box, thus preventing the rodent's neophobic instincts from being activated. Accordingly, the boxes are more efficacious, as fewer rodents are scared away therefrom. A pest station 100 having this advantageous configuration is described in further detail in PCT/GB2017/051758 and Z GB1610567.8.

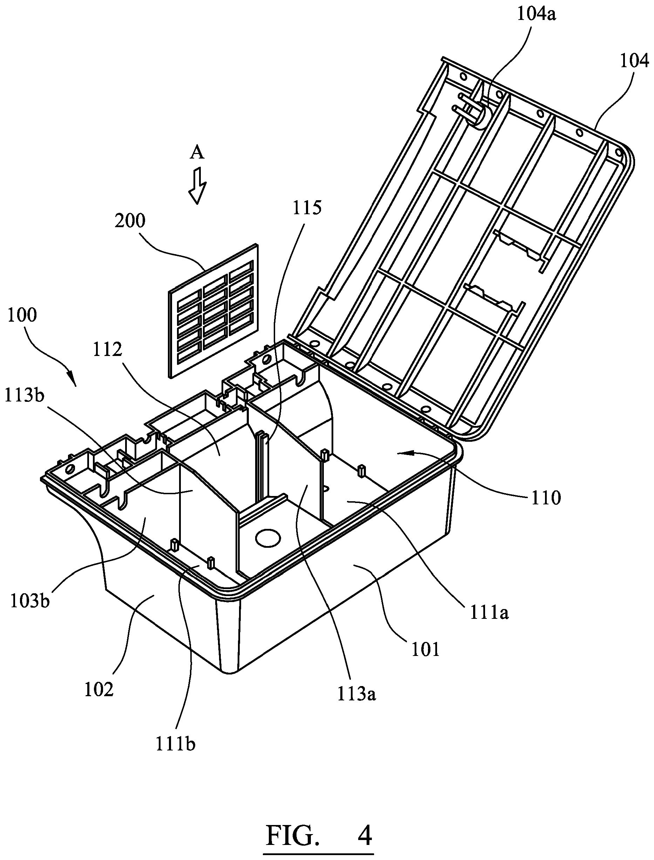

As can be best seen in FIG. 4, the lower portion 103b comprises an aperture 112, which allows access to the chamber 110. In one example, two guard walls 113a, b are formed adjacent the aperture 112 and internal to the chamber 100 extending towards, but not reaching, the rear wall 101. The two trapping/killing zones 111a, b are therefore each positioned between a respective guard wall 113 and side walls 102. The guard walls 113 therefore define a corridor extending into the chamber 110, which then separates into two sub-chambers each comprising a trapping/killing zone 111.

The lid 104 may be opened to allow access to chamber 110, in order to maintain the station 100. In the invention, the lid 104 is hingedly connected to the station 100. For example, the lid 104 is hingedly connected to one of the walls 101,102,103. In one example, a lock 104a is provided to secure the lid 104 shut. For example, the lock 104a may be a combination lock or a lock openable by a key. Accordingly, the lid 104 can only be opened by an authorised service engineer.

The pest station 100 comprises a retaining portion operable to retain a non-target species barrier 200, which will be described in more detail below. Particularly, the barrier 200 is retained so as to prevent access to the chamber 110 via the aperture 112.

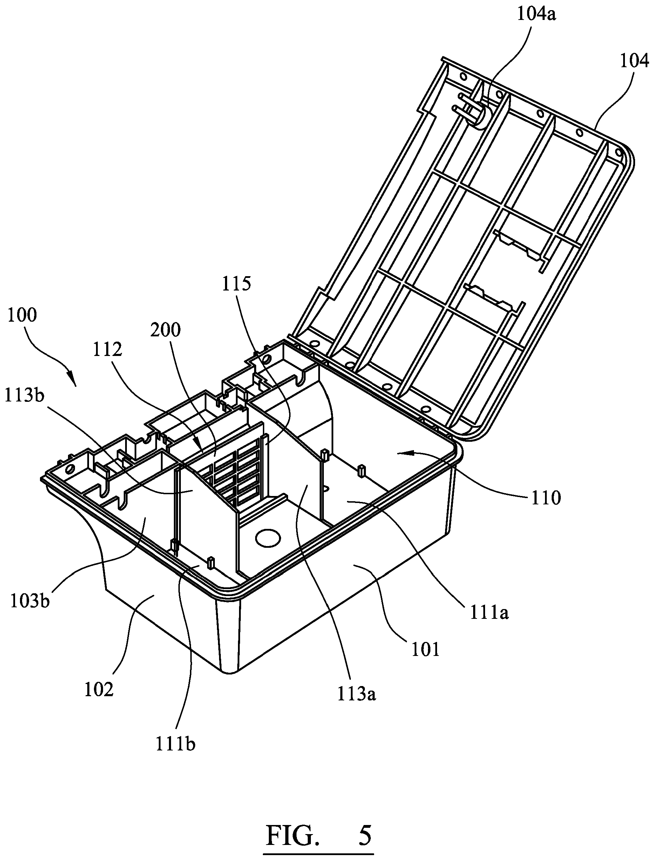

In one example, the retaining portion comprises a plurality of downwardly-extending slots, each slot being defined by a pair of runners 115. Although only one slot is visible in FIGs. 4 and 5, it will be understood that a corresponding slot is formed at the other side of the aperture 112. Accordingly, a non-target species barrier 200 can be slid downwards in direction A into the slots, so that it is retained in the station 100.

It will be understood that, in other examples, the slots could be horizontally-extending to permit the insertion of a barrier 200 in a horizontal direction, or arranged at any other angle. Furthermore, a combination of three slots could be used (e.g. two vertical and one horizontal), so as to retain three sides of the barrier 200.

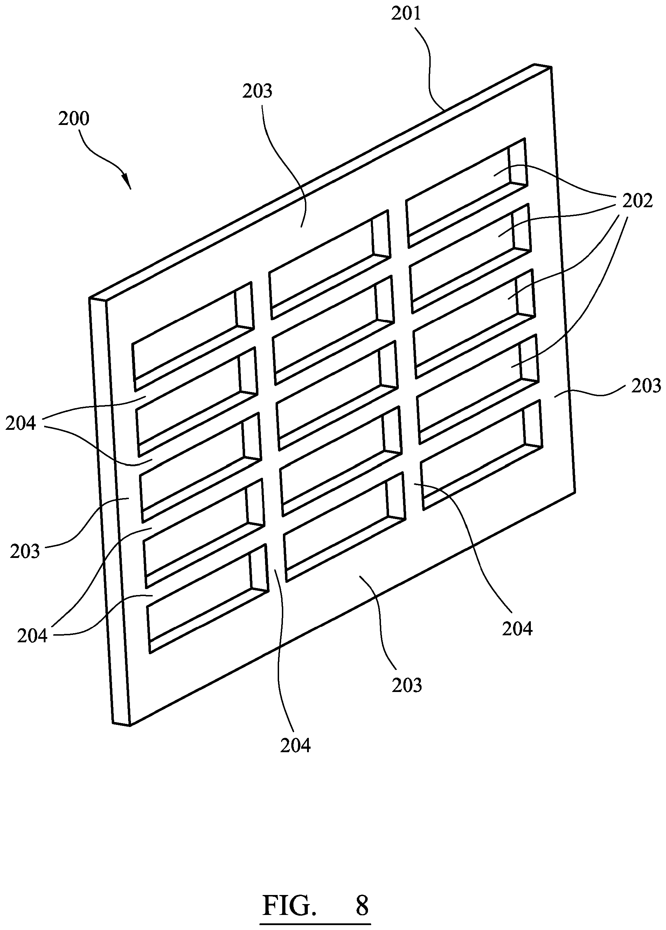

An exemplary non-target species barrier 200 will now be described with reference to FIG. 8. The barrier 200 takes the form of a relatively thin, planar sheet 201, in which a plurality of apertures 202 are formed. The apertures 202 enable scent of the lure associated with the trapping/killing means to be seen and smelled by the target species pest. In one example, the apertures 202 are small enough to prevent a non-target species (e.g. a slug or small rodent) passing therethrough.

In one example, the barrier 200 is formed from cardboard. The cardboard may be wax-coated, which increases its rigidity and makes it less susceptible to damage caused by moisture. In other examples, the barrier 200 is formed by a plastic or fabric that can be chewed, gnawed or otherwise broken through by the target pest.

A border region 203 extending around the periphery of the sheet 201 has no apertures 202 formed therein, and is retained in use by the retaining portion of the station 100. In addition, the border 203 is larger at the bottom of the barrier 200 (e.g. approximately 20mm), to prevent slugs crawling through. A similarly sized border may be provided at the top edge of the barrier 200, so that the barrier 200 has reflectional symmetry in a horizontal, central axis. Accordingly, the barrier 200 may be installed in either orientation, simplifying installation.

In one example, the apertures 202 are formed in a grid arrangement, defined by vertical and horizontal cross-members 204. The example shown is a 3 x 5 grid to give 15 apertures. However, it will be understood that the size and shape of the apertures 202 may be varied. For example, square, circular, triangular or oval-shaped apertures may be employed. The apertures may vary in size, rather than being uniform as shown in the figures.

Use of the pest station 100 and non-target species barrier 200 will now be discussed with particular reference to FIGs 4 and 5.

Initially, the pest station 100 is installed, for example so that the upper portion 103a of front wall 103 abuts a wall (not shown). The lid 104 is then opened, and trapping/killing means are placed in respecting trapping/killing zones 111a,b. For example, this may involve placing traps (e.g. mechanical and/or glue traps), and/or deploying rodenticide. The trapping/killing means will comprise a lure, for example in the form of a foodstuff, to attract the pest to the pest station 100.

Either before or after placing the trapping/killing means, a non-target species barrier 200 is installed in the retaining portion of the pest station 100, for example by sliding it into the slots formed by runners 115. Accordingly, the path from the entry to the station (i.e. aperture 112) to the lure is blocked by the barrier 200. In further example, the barrier 200 may be installed in the pest station 100 before installation (e.g. during construction).

The lid 104 is then closed, and locked by lock 104a.

After installation, if a target species, for example a rat, is drawn to the pest station by the lure, it may attempt to access the chamber 100. The barrier 200 blocks the path of the rat to the trapping/killing means.

However, the construction of the barrier 200 is such that the rat, motivated by the scent of the lure, will gnaw, chew, scratch or otherwise attack the barrier 200. For example, the rat may gnaw at the cross-members 204, which are a particular point of weakness in the barrier 200. The rat therefore forms an aperture in the barrier 200.

After breaching the barrier 200, the rat will reach the trapping/killing means and be trapped/killed thereby.

If, on the other hand, a non-target species is drawn to the pest station by the lure, it may attempt to access the chamber 100. The barrier 200 will block the path of the non-target species to the trapping/killing means.

In some cases, a non-target species (e.g. a hedgehog or squirrel) will be deterred by the presence of the barrier 200, and therefore be insufficiently motivated to attempt to breach it. In other cases, a non-target species (e.g. a rodent smaller than a rat) will not have sufficient strength to break through the barrier 200. Accordingly, the non-target species will not access the chamber 100.

Of course, a non-target species may arrive after the target species has already breached the barrier 200. However, the target species will have likely eaten the lure, thus making it less likely that the non-target species will seek to access the chamber. Furthermore, the target species will have activated the trapping/killing means (e.g. consumed the poison or activated a mechanical trap), which will then not be available to harm the non-target species.

Subsequently, a user (e.g. a service engineer) services the pest station 100 by opening the lid 104 and removing the dead/trapped pest. The breached barrier 200 is removed and discarded, and replaced with a new barrier 200. The trapping/killing means are replaced, or reset in the case of mechanical traps. The pest station 100 is then ready for subsequent use.

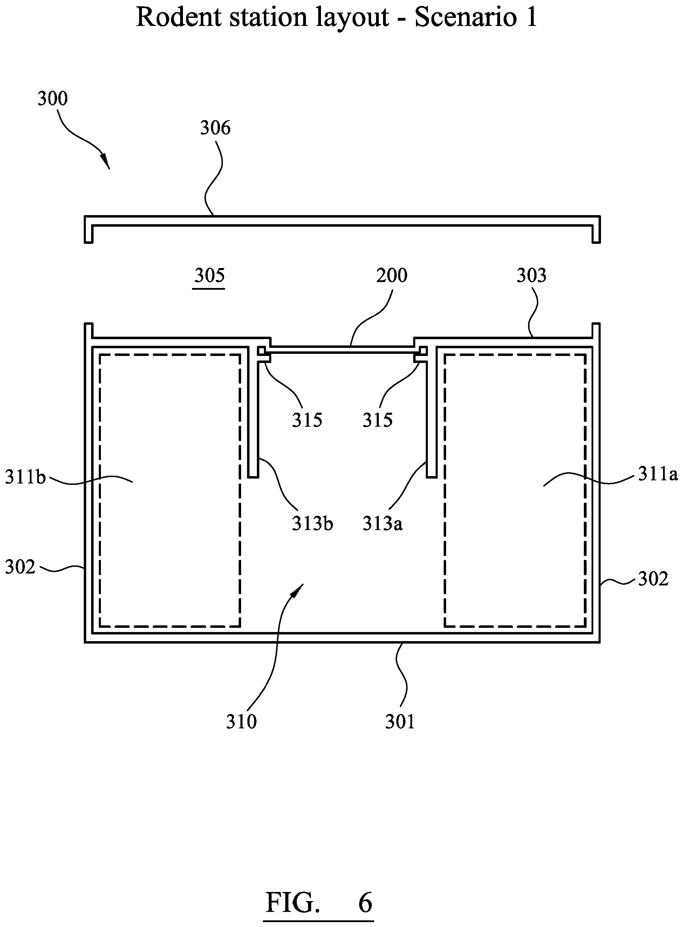

FIG 6 shows a pest station 300 according to a further example of the invention. The pest station 300 corresponds largely in structure and function to the example described above with reference to FIGs 1-5, with reference numerals prefixed with "3" corresponding to those prefixed with "1" in the description of pest station 100. Accordingly, a detailed discussion of those elements will not be repeated.

However, the pest station 300 differs from pest station 100 by comprising a tunnel 305 defined by front wall 303, and tunnel wall 306. The tunnel wall 306 encloses the tunnel 305. Accordingly, the channel along which the pest passes is not defined by the wall against which the station 300 is placed, but instead by the tunnel wall 306.

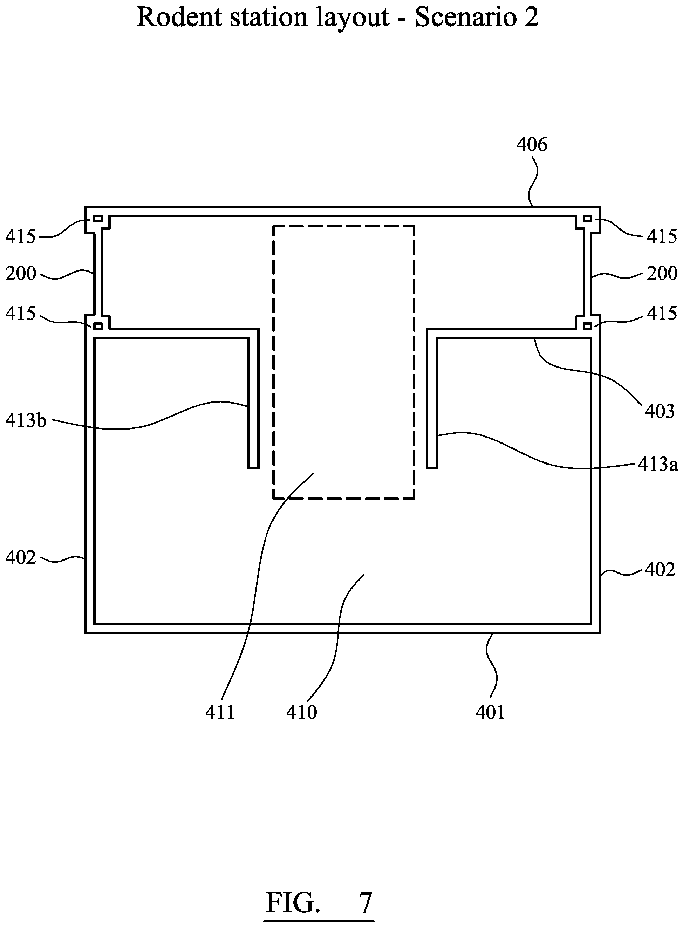

FIG. 7 shows a pest station 400 according to a further example of the invention. The pest station 400 corresponds largely in structure and function to the exemplary pest stations 100, 300 described above, with reference numerals prefixed with "4" corresponding to those prefixed with "1" in the description of pest station 100 and "3" in the description of pest station 300. Accordingly, a detailed discussion of those elements will not be repeated.

However, the pest station 400 differs in that a pair of non-target species barriers 200 are included. Particularly, a respective barrier 200 is disposed at each end of the tunnel 405, so as to prevent ingress to the tunnel 405. Accordingly, the tunnel 405 can be considered the chamber in this example.

Furthermore, pest station 400 differs in that it comprises a single trapping/killing zone 411, for retaining a single trapping/killing means. In one example, the pest station 400 is configured so that the trapping/killing means extends into the tunnel, thereby trapping/killing pests passing along the tunnel 405 without the pests having to enter interior chamber 410.

The example pest stations 300, 400 operate in a similar manner to pest station 100, and therefore a detailed description of the use thereof will not be repeated.

It will be appreciated that various modifications to the examples described herein will be apparent to the skilled reader.

Whilst the examples above are of rodent stations for catching/killing rats, it will be appreciated that a disposable barrier, capable of being broken through by a target pest whilst having sufficient strength or rigidity to deter a non-target pest, may be used in the capture of a wide variety of rodents.

It will be further understood that, whilst the pest stations 100, 300, 400 described above define a channel along which a pest passes, the pest stations may have a different construction not involving such a channel. For example, an aperture may be simply formed in a side wall of the station, with the barrier 200 disposed to prevent access via the aperture. Alternatively, the pest station may be a live catch trap, which incorporates a spring-loaded or weighted door that shuts behind a pest entering the trap, so as to catch it humanely. Such live catch traps are typically formed of a wire cage.

The location and number of barriers 200 retained within the pest station 100 may be varied. For example, the barrier 200 may be disposed further inside the station 100, so that a pest must travel some way into the station 100 before reaching it. In a further example, a barrier may be disposed corresponding to each trapping/killing means.

The pest stations may comprise more or fewer trapping/killing means - for example 1, 2, 3 or 4 trapping/killing means. Each station may comprise a combination of different types of trapping/killing means - e.g. rodenticide combined with mechanical traps.

Advantageously, the non-target species barriers and pest stations described herein reduce the likelihood that a non-target species will access the interior of the pest station and activate the trapping/killing means. Accordingly, death and injury of non-target species is prevented, at least until initial breach of the non-target species barrier by the target species. In addition, deterrence of the non-target species ensures that the pest station is still available for trapping/killing the target species.

Furthermore, the barrier is cheap and easy to manufacture from a readily available material such as cardboard. Accordingly, the damage caused to the barrier when it is breached by the target species is acceptable, because the barrier itself is simply disposed of and replaced. In addition, the construction of the barrier ensures that the scent of a lure in the pest station can still be smelled by the target species.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The scope of the invention is defined by the appended claims.

## Claims

1. A pest station (100) for trapping a target species, comprising:
a chamber (110), and
a non-target species barrier (200) adapted to prevent ingress of non-target species to a pest station (100) by having sufficient strength to prevent a non-target species from breaching the barrier, the pest station (100) being configured to retain the non-target species barrier (200), positioned so as to prevent ingress of non-target species to the chamber (110);
wherein the non-target species barrier (200) is formed of cardboard, fabric or plastic,
wherein the non-target species barrier (200) comprising a plurality of apertures (202),
wherein the apertures (202) are sized such that the non-target species and a target species cannot pass therethrough,
wherein the non-target species barrier (200) is adapted to allow formation of an aperture therein by chewing, gnawing and/or scratching of a target species, so as to allow ingress of the target species to the pest station (200), and
wherein the target species is a rodent,
**characterised in that**:
the pest station further comprises a retaining portion configured to retain the non-target species barrier (200), wherein the retaining portion comprises a plurality of slots, each slot being arranged to retain a respective edge of the non-target species barrier (200); and
a lid (104) hingedly attached to the pest station (100);
wherein the non-target species barrier (200) is a sheet (201) slidably attachable to the retaining portion.

2. The pest station of claim 1, wherein the non-target species barrier (200) comprises a border region (203) without apertures (202) extending inwards from at least one edge of the non-target species barrier.

3. The pest station (100) of claim 1 or 2, comprising an entrance section having an aperture (112) formed therein to allow access to the chamber (110), wherein the non-target species barrier (200) covers the aperture (112) once installed.

4. The pest station (100) of any preceding claim, wherein the chamber (110) comprises a trapping/killing zone (111a,b), operable to retain a trapping/killing means, wherein the trapping/killing means comprises poison or a mechanical trap.

5. The pest station (100) of any preceding claim, wherein the pest station is a live catch trap.

6. The pest station (100) of any preceding claim, comprising a spacer (103a), extending in a direction away from the chamber (110), so as to define a channel between the pest station and a wall when the spacer (103a) is placed against the wall.

7. A method of servicing a pest station as defined in any preceding claim comprising the step of:
installing the non-target species barrier (200) , so as to prevent ingress of non-target species to the chamber (110) of the pest station (100).

## Patentansprüche

1. Schädlingsstation (100) zum Fangen einer Zielspezies, umfassend:
eine Kammer (110) und
eine Sperre (200) gegenüber Organismen, die keine Zielspezies sind, die dazu ausgeführt ist, das Eindringen von Organismen, die keine Zielspezies sind, in eine Schädlingsstation (100) zu verhindern, indem sie ausreichende Festigkeit hat, um Organismen, die keine Zielspezies sind, am Durchbrechen der Sperre zu hindern, wobei die Schädlingsstation (100) dazu ausgestaltet ist, die Sperre (200) gegenüber Organismen, die keine Zielspezies sind, zu halten, und so positioniert ist, dass sie das Eindringen von Organismen, die keine Zielspezies sind, in die Kammer (110) verhindert,
wobei die Sperre (200) gegenüber Organismen, die keine Zielspezies sind, aus Pappe, Gewebe oder Kunststoff ausgebildet ist,
wobei die Sperre (200) gegenüber Organismen, die keine Zielspezies sind, eine Vielzahl von Öffnungen (202) umfasst,
wobei die Öffnungen (202) so bemessen sind, dass die Organismen, die keine Zielspezies sind, und eine Zielspezies nicht hindurchgehen können,
wobei die Sperre (200) gegenüber Organismen, die keine Zielspezies sind, dazu ausgeführt ist, das Bilden einer Öffnung darin zu gestatten, indem eine Zielspezies sie zerkaut, daran nagt und/oder sie wegkratzt, um ein Eindringen der Zielspezies in Schädlingsstation (200) zu gestatten, und
wobei die Zielspezies ein Nagetier ist,
**dadurch gekennzeichnet, dass**:
die Schädlingsstation ferner einen Halteabschnitt umfasst, der dazu ausgestaltet ist, die Sperre (200) gegenüber Organismen, die keine Zielspezies sind, zu halten, wobei der Halteabschnitt eine Vielzahl von Schlitzen umfasst, wobei jeder Schlitz dazu angeordnet ist, einen jeweiligen Rand der Sperre (200) gegenüber Organismen, die keine Zielspezies sind, zu halten, und
einen Deckel (104), der scharniermäßig an der Schädlingsstation (100) angebracht ist,
wobei die Sperre (200) gegenüber Organismen, die keine Zielspezies sind, ein Flächengebilde (201) ist, das verschiebbar an dem Halteabschnitt anbringbar ist.

2. Schädlingsstation nach Anspruch 1, wobei die Sperre (200) gegenüber Organismen, die keine Zielspezies sind, einen Grenzbereich (203) ohne Öffnungen (202) umfasst, die sich von mindestens einem Rand der Sperre gegenüber Organismen, die keine Zielspezies sind, nach innen erstrecken.

3. Schädlingsstation (100) nach Anspruch 1 oder 2, umfassend einen Eingangsabschnitt mit einer darin ausgebildeten Öffnung (112), um Zugang zu der Kammer (110) zu gestatten, wobei die Sperre (200) gegenüber Organismen, die keine Zielspezies sind, die Öffnung (112) nach der Installierung abdeckt.

4. Schädlingsstation (100) nach einem der vorhergehenden Ansprüche, wobei die Kammer (110) eine Fang-/Vernichtungszone (111a,b) umfasst, die dahingehend betätigbar ist, ein Fang-/Vernichtungsmittel zu halten, wobei das Fang-/Vernichtungsmittel Gift oder eine mechanische Falle umfasst.

5. Schädlingsstation (100) nach einem der vorhergehenden Ansprüche, wobei die Schädlingsstation eine Falle ist, in der Organismen lebend gefangen werden.

6. Schädlingsstation (100) nach einem der vorhergehenden Ansprüche, umfassend einen Abstandhalter (103a), der sich in eine von der Kammer (110) weg gehende Richtung erstreckt, um einen Kanal zwischen der Schädlingsstation und einer Wand zu definieren, wenn der Abstandhalter (103a) gegen die Wand platziert ist.

7. Verfahren zum Unterhalten einer Schädlingsstation nach einem der vorhergehenden Ansprüche, umfassend den folgenden Schritt:
Installieren der Sperre (200) gegenüber Organismen, die keine Zielspezies sind, um das Eindringen von Organismen, die keine Zielspezies sind, in die Kammer (110) der Schädlingsstation (100) zu verhindern.

## Revendications

1. Station anti-nuisible (100) pour piéger une espèce cible, comprenant :
une chambre (110), et
une barrière contre les espèces non cibles (200) conçue pour empêcher l'entrée d'espèces non cibles dans une station anti-nuisible (100) en ayant une résistance suffisante pour empêcher une espèce non cible de franchir la barrière, la station anti-nuisible (100) étant conçue pour retenir la barrière contre les espèces non cibles (200) positionnée de sorte à empêcher l'entrée d'espèces non cibles dans la chambre (110) ;
la barrière contre les espèces non cibles (200) étant formée de carton, de tissu ou de plastique,
la barrière contre les espèces non cibles (200) comprenant une pluralité d'ouvertures (202),
les ouvertures (202) étant dimensionnées de sorte que l'espèce non cible et une espèce cible ne puissent pas passer au travers,
la barrière contre les espèces non cibles (200) étant conçue pour permettre la formation d'une ouverture en son sein par mastication, rongement et/ou grattage d'une espèce cible, de sorte à permettre l'entrée de l'espèce cible dans la station anti-nuisible (200), et
l'espèce cible étant un rongeur,
**caractérisée en ce que** :
la station anti-nuisible comprend en outre une partie de retenue conçue pour retenir la barrière contre les espèces non cibles (200), la partie de retenue comprenant une pluralité de fentes, chaque fente étant conçue pour retenir un bord respectif de la barrière contre les espèces non cibles (200) ; et
un couvercle (104) fixé de manière articulée à la station anti-nuisible (100) ;
la barrière contre les espèces non cibles (200) étant une feuille (201) pouvant être fixée de manière coulissante à la partie de retenue.

2. Station anti-nuisible selon la revendication 1, la barrière contre les espèces non cibles (200) comprenant une région de bordure (203) sans ouverture (202) s'étendant vers l'intérieur depuis au moins un bord de la barrière contre les espèces non cibles.

3. Station anti-nuisible (100) selon la revendication 1 ou 2, comprenant une section d'entrée ayant une ouverture (112) formée en son sein pour permettre l'accès à la chambre (110), la barrière contre les espèces non cibles (200) couvrant l'ouverture (112) une fois installée.

4. Station anti-nuisible (100) selon l'une quelconque des revendications précédentes, la chambre (110) comprenant une zone de piégeage/mise à mort (111a, b) permettant de retenir un moyen de piégeage/mise à mort, le moyen de piégeage/mise à mort comprenant du poison ou un piège mécanique.

5. Station anti-nuisible (100) selon l'une quelconque des revendications précédentes, la station anti-nuisible étant un piège à capture vivante.

6. Station anti-nuisible (100) selon l'une quelconque des revendications précédentes, comprenant une entretoise (103a), s'étendant dans une direction s'éloignant de la chambre (110), de sorte à définir un canal entre la station anti-nuisible et un mur lorsque l'entretoise (103a) est placée contre le mur.

7. Procédé d'entretien d'une station anti-nuisible selon l'une quelconque des revendications précédentes, comprenant l'étape consistant à :
installer la barrière contre les espèces non cibles (200), de sorte à empêcher l'entrée d'espèces non cibles dans la chambre (110) de la station anti-nuisible (100).
